# EUROPÄISCHE PATENTSCHRIFT

(11) **EP 3 008 500 B1**
(45) Veröffentlichungstag und Bekanntmachung des Hinweises auf die Patenterteilung: **05.10.2022**
(21) Anmeldenummer: 14729651.1
(22) Anmeldetag: 10.06.2014
(51) Int. Cl.: G01V 8/20, F16P 3/14

(54) **LICHTGITTERBAUTEIL**
LIGHT GRID COMPONENT
ÉLÉMENT DE BARRIÈRE PHOTOÉLECTRIQUE

(30) Priorität: 13.06.2013 DE 102013106185
(43) Veröffentlichungstag der Anmeldung: 20.04.2016
(73) Patentinhaber: Pilz Auslandsbeteiligungen GmbH, 73760 Ostfildern (DE)
(72) Erfinder: GULDIMANN, Dominik, CH-7310 Bad Ragaz (CH); LOOP, Roger, CH-7310 Bad Ragaz (CH)
(74) Vertreter: Witte, Weller & Partner Patentanwälte mbB
(86) Internationale Anmeldenummer: PCT/EP2014/062008
(87) Internationale Veröffentlichungsnummer: WO 2014/198713

(56) Entgegenhaltungen:
- EP-A2- 0 097 317
- WO-A1-00/54077
- DE-A1-102010 008 895
- JP-A- 2003 178 655
- US-A1- 2010 171 028

## Beschreibung

Die vorliegende Erfindung betrifft gemäß dem Oberbegriff des Anspruchs 1 ein Lichtgitterbauteil mit einem Gehäuse, welches sich im Wesentlichen entlang einer Längsrichtung erstreckt und mehrere im Gehäuse angeordnete, optoelektronische Sende- oder Empfangselemente aufweist, welche zu einer Oberseite des Gehäuses hin ausgerichtet sind und entlang der Längsrichtung voneinander beabstandet sind, wobei das Gehäuse eine Stirnseite aufweist, welche quer zur Oberseite verläuft. Die vorliegende Erfindung betrifft ferner ein Lichtgitter mit einem solchen Lichtgitterbauteil.

Lichtgitter und Lichtgitterbauteile der oben genannten Art sind in einer Vielzahl bereits aus dem Stand der Technik bekannt. Gattungsgemäße Lichtgitterbauteile mit den Merkmalen des Oberbegriffs des Anspruchs 1 sind beispielsweise aus der JP 2003 178655 A und der WO 00/54077 A1 bekannt. Derartige Lichtgitter werden häufig auch als Lichtschrankenanordnung oder Lichtgitterschutzvorrichtung bezeichnet. Sie dienen meist der Absicherung von Gefahrenbereichen. Ein häufiges Anwendungsbeispiel betrifft die Absicherung von automatisiert arbeitenden Maschinen oder Industrierobotern. Bei modernen automatisiert arbeitenden Maschinen oder Industrierobotern, die sich mit erheblichen Geschwindigkeiten bewegen, führen Kollisionen in der Regel zu ernsthaften Schäden, sowohl an den Maschinen oder Robotern als auch an den von diesen gehandhabten Werkstücken. Dies kann zu kostspieligen Produktionsausfällen führen. Auch hat die Sicherheit von Personen, welche mit den automatisiert arbeitenden Maschinen oder Robotern interagieren, höchste Priorität. Bei modernen Industrierobotern und anderen Maschinen mit bewegten Maschinenelementen, deren Bewegung eine Gefahr für Personen und andere Objekte darstellen, muss daher durch Schutzeinrichtungen verhindert werden, dass es zu einer Kollision zwischen den bewegten Maschinenelementen und einem Fremdobjekt kommt. Hierzu werden die Lichtgitter meist um die gefährlichen Bereiche herum angeordnet, um diese Bereiche virtuell abzusperren. Sobald eine Person eine von einem Lichtgitter erzeugte Lichtschranke unterbricht, wird vorzugsweise ein Abschaltsignal erzeugt, mit dem die gefährdende Arbeitsbewegung der Maschine angehalten wird, oder die Maschine in einen sicheren Zustand gebracht wird.

Lichtgitter weisen dazu meist mehrere, einander gegenüberliegende Lichtgitterschienen auf, welche während des Betriebs des Lichtgitters miteinander interagieren. Eine Lichtgitterschiene beinhaltet üblicherweise eine Vielzahl von Lichtsendern, vorzugsweise in Form von Laserdioden und/oder Infrarotdioden zur Aussendung von Laser- bzw. Infrarotstrahlen. Eine dieser gegenüberliegende Lichtgitterschiene, welche als Gegenstück dazu fungiert, beinhaltet eine Vielzahl von entsprechenden Lichtempfängern, mithilfe derer das Auftreffen der Laser- bzw. Infrarotstrahlen detektierbar ist. Sobald einer dieser Laser- bzw. Lichtstrahlen durch ein Fremdobjekt unterbrochen wird, wird die Maschine daraufhin mithilfe geeigneter Steuerungseinrichtungen abgeschaltet bzw. in einen sicheren Zustand gebracht.

Um eine größtmögliche Sicherheit zu gewährleisten, sind sogenannte Tot- oder Blindzonen, also Zonen, die vom Lichtgitter nicht abgedeckt werden, unbedingt zu vermeiden. Bei Lichtgittern, die meist aus einzelnen stabförmigen Lichtgitterschienen zu einer rechteckigen Lichtgitteranordnung zusammengesetzt werden, ist dies insbesondere in den Ecken der Lichtgitteranordnung oft schwierig zu gewährleisten. Die Sende- oder Empfangselemente sind meist in gleichmäßigen Abständen in den Gehäusen der einzelnen Lichtgitterschiene angeordnet. In den Ecken einer Lichtgitteranordnung, in denen die Enden zweier Lichtgitterschienen im rechten Winkel aufeinander treffen, kommt es jedoch meist zu einer Unterbrechung bzw. Veränderung des sogenannten Pitches (des Abstandes zwischen zwei benachbarten Sende- bzw. Empfangselementen), was zu Sicherheitseinbußen in diesen Bereichen führt.

Der Grund für den veränderten Abstand ergibt sich aus der Tatsache, dass die in den Ecken aufeinander treffenden Lichtgitterschienen aufgrund der Gehäuse meist nicht dicht genug aneinander montiert werden können.

Eine Lösung dieses Problems besteht darin, die in den Ecken aufeinander treffenden Lichtgitterschienen überlappend zueinander anzuordnen. Dies erfordert jedoch, dass die Lichtgitterschienen parallel zueinander versetzt sind, was sicherheitstechnisch meist unerwünscht ist.

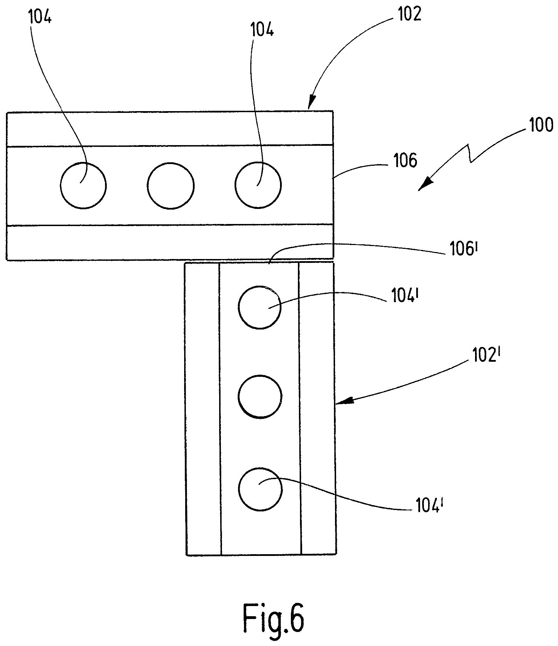

Eine andere Lösung dieses Problems wurde von der Turck GmbH & Co. KG vorgestellt (siehe Weber, A.: "Sicher ohne blinden Fleck", in A & D, Vorsprung Automation, Ausgabe 5.2013, S. 49-51). Diese Lösung ist schematisch in Fig. 6 dargestellt. Die von der Turck GmbH & Co. KG vorgeschlagene Lichtgitteranordnung 100 weist zwei rechtwinklig zueinander angeordnete Lichtgitterschienen 102, 102' auf, welche jeweils eine Vielzahl von Sende- bzw. Empfangselementen 104, 104' aufweisen. Um den Versatz zwischen den in den Ecken angeordneten Sende- bzw. Empfangselementen 104,104' möglichst gering zu halten, sind die stirnseitigen Enden 106, 106' bei dieser Lösung nicht von dem Gehäuse ummantelt. Tot- bzw. Blindzonen können somit in den Ecken vermieden werden. Diese Lösung hat allerdings den Nachteil, dass aufgrund der fehlenden Gehäuseummantelung an den Stirnseiten 106, 106' die Stirnseiten 106, 106' der einzelnen Lichtgitterschienen 102, 102' nicht gegen mechanische Stöße abgesichert sind. Daher kann es insbesondere bei der Montage des Lichtgitters, aber auch während des Betriebs relativ einfach zu unerwünschten Beschädigungen an den Stirnseiten 106, 106' der Lichtgitterschienen 102, 102' kommen.

Die aus der JP 2003 178655 A und der WO 00/54077 A bekannten Lichtgitterbauteile sind an ihren Stirnseiten rund ausgestaltet, weshalb diese schwierige aneinander gebaut werden können. Gemäß der WO 00/54077 A wird ein zusätzliche Halterung benötigt, welche die Lichtgitterbauteile zumindest teilweise umgibt und in Position hält.

Vor diesem Hintergrund ist es eine Aufgabe der vorliegenden Erfindung, ein Lichtgitterbauteil der eingangs genannten Art anzugeben, mit dem Tot- bzw. Blindzonen in den Ecken einer Lichtgitteranordnung wirksam vermieden werden können, ohne dass dabei die oben genannten Nachteile einer verminderten mechanischen Absicherung auftreten.

Diese Aufgabe wird erfindungsgemäß durch ein Lichtgitterbauteil der eingangs genannten Art gelöst, wobei die Stirnseite in einer Draufsicht im Wesentlichen trapezförmig ist und eine erste, eine zweite sowie eine dritte planare Stirnfläche aufweist, wobei die erste und die zweite planare Stirnfläche mit der Längsrichtung jeweils einen Winkel von 45° einschließen und untereinander einen Winkel von 90° einschließen, wobei die dritte planare Stirnfläche orthogonal zu der Längsrichtung ausgerichtet ist und die erste und die zweite Stirnfläche miteinander verbindet, und wobei eines der im Gehäuse angeordneten, optoelektronischen Sende- oder Empfangselemente, welches der Stirnseite räumlich am nächsten liegt, einen gleich großen ersten Abstand von der ersten, der zweiten und der dritten planaren Stirnfläche hat.

Die Idee besteht also darin, eine planare Stirnfläche des Lichtgitterbauteils, statt wie sonst üblich orthogonal zur Längsrichtung des Gehäuses auszurichten, nun schräg zur Längsrichtung auszurichten, also in einem Winkel kleiner 90°. Die erste planare Stirnfläche verläuft vorzugsweise orthogonal zur Oberseite des Gehäuses und schräg zur Längsrichtung des Gehäuses. Diese Änderung ermöglicht es, zwei solcher Lichtgitterbauteile in einer Ecke bündig aneinanderzufügen, ohne dass es zu einer unerwünschten Bildung von Tot- oder Blindzonen kommt, wie dies anhand der nachfolgenden Figuren beispielhaft erläutert wird. Im Gegensatz zu der oben beschriebenen, aus dem Stand der Technik bekannten Lösung ist das Gehäuse trotz dessen auch an der Stirnseite fortgeführt, so dass auch hier ein mechanischer Schutz gegen Beschädigung gewährleistet ist. Eine solche abgeschrägte Stirnfläche lässt sich im Übrigen auch sehr leicht herstellen, so dass es zu keinen oder nur zu unerheblichen Steigerungen der Produktionskosten eines solchen Lichtgitterbauteils kommt.

Zwei Lichtgitterbauteile dieser Art können somit relativ einfach durch Aneinanderfügen der jeweiligen ersten planaren Stirnflächen zur Bildung einer Ecke, also eines 90° Winkels, miteinander verbunden werden. Gegenüber einem stumpfen Aufeinandersetzen zweier Lichtgitterbauteile mit orthogonal zur Längsrichtung ausgerichteten Stirnflächen, wie dies im Stand der Technik der Fall ist, lassen sich die Sende- und Empfangselemente aufgrund der abgeschrägten Stirnseiten näher an diesen Stirnseiten anordnen. Der Abstand zwischen der Stirnseite bzw. der ersten planaren Stirnfläche und dem nächstliegenden Sende- oder Empfangselement lässt sich dadurch also minimieren. Dies erweist sich wiederum in Bezug auf die Verhinderung von Tot- oder Blindzonen als vorteilhaft.

Gemäß einer Ausgestaltung ist der erste Abstand zwischen der ersten planaren Stirnfläche und einem der im Gehäuse angeordneten, optoelektronischen Sende- oder Empfangselemente, welches der Stirnseite räumlich am nächsten liegt, maximal halb so groß wie ein zweiter Abstand zwischen zwei im Gehäuse direkt benachbarten, optoelektronischen Sende- oder Empfangselementen.

Werden zwei Lichtgitter dieser Art zur Bildung einer Ecke aneinandergefügt, so kommt es gemäß dieser Ausgestaltung in der Ecke zu keiner Vergrößerung des Pitches, also zu keiner Vergrößerung des Abstandes zwischen zwei benachbarten Sende- oder Empfangselementen.

Vorzugsweise ist der erste Abstand genau halb so groß wie der zweite Abstand. In diesem Fall kommt es in der Ecke zu keinerlei Veränderung des Pitches, also zu keiner Veränderung des Abstandes zwischen zwei benachbarten Sende- oder Empfangselementen. So lange die beiden Lichtgitterbauteile nämlich mit den jeweiligen ersten planaren Stirnflächen bündig aneinandergesetzt werden, haben die beiden Sende- oder Empfangselemente, welche der jeweiligen Stirnseite räumlich am nächsten liegen, den gleichen Abstand voneinander (Pitch), der auch bei den übrigen benachbart angeordneten Sende- oder Empfangselementen auftritt.

Die zweite planare Stirnfläche ist erfindungsgemäß orthogonal zur ersten planaren Stirnfläche angeordnet. Beide planaren Stirnflächen verlaufen vorzugsweise auch orthogonal zur Oberseite des Gehäuses. Darüber hinaus sind die beiden Stirnflächen vorzugsweise gleich groß ausgestaltet. Dies führt zu einer symmetrischen Stirnseite. Durch die gemäß dieser Ausgestaltung vorgesehene zweite planare Stirnfläche wird die Flexibilität des Lichtgitterbauteils zusätzlich erhöht. Zur Bildung einer Ecke lässt sich ein weiteres Lichtgitterbauteil dieser Art nämlich sowohl angrenzend an die erste planare Stirnfläche als auch angrenzend an die zweite, quer dazu verlaufende planare Stirnfläche ansetzen.

In oben genanntem Beispiel, bei dem zwei Lichtgitterbauteile dieser Art zur Bildung einer Ecke zusammengesetzt werden, resultieren daraus also die gleichen Lichtgittereigenschaften, unabhängig davon, ob die erste oder die zweite planare Stirnfläche als Kontaktfläche zwischen den beiden Lichtgitterbauteilen verwendet wird. Da der Abstand zwischen dem der Stirnseite nächstliegenden optoelektronischen Sende- oder Empfangselement und der ersten bzw. der zweiten planaren Stirnfläche vorzugsweise halb so groß gewählt ist wie der Abstand zwischen zwei im Gehäuse direkt benachbarten, optoelektronischen Sende- oder Empfangselementen, kommt es in beiden Fällen zu keiner Veränderung des Pitches. In beiden Fällen lässt sich also eine Totzonen- bzw. blindzonenfreie Ecke des Lichtgitters herstellen.

Die dritte planare Stirnfläche ist räumlich zwischen der ersten und der zweiten planaren Stirnfläche angeordnet. Eine solche dritte planare Stirnfläche erhöht die Flexibilität des Lichtgitterbauteils noch weiter. Das Lichtgitter lässt sich dann nämlich auch noch mit der dritten planaren Stirnfläche an einer korrespondierenden Stirnfläche eines weiteren Lichtgitterbauteils ansetzen. Die Stirnseite des Lichtgitterbauteils weist somit drei verschiedene Anlageflächen auf, mit denen es ein weiteres Lichtgitterbauteil dieser Art kontaktieren kann. Zwei Lichtgitterbauteile dieser Art lassen sich also nicht nur in einem 90° Winkel zueinander anordnen, sondern auch in einem 45° Winkel zueinander als auch fluchtend miteinander anordnen. Durch die drei an der Stirnseite des Lichtgitterbauteils vorgesehenen planaren Stirnflächen hat die Stirnfläche in einer Draufsicht von oben betrachtet im Wesentlichen die Form eines Trapezes ohne Grundseite.

Erfindungsgemäß hat eines der im Gehäuse angeordneten, optoelektronischen Sende- oder Empfangselemente, welches der Stirnseite räumlich am nächsten liegt, einen gleich großen Abstand von der ersten, der zweiten und der dritten planaren Stirnfläche. Dieser Abstand ist vorzugsweise wiederum halb so groß gewählt wie der Abstand zwischen zwei im Gehäuse direkt benachbarten, optoelektronischen Sende- oder Empfangselementen. Somit ist es auch gemäß dieser Ausgestaltung egal, mit welcher der drei planaren Stirnflächen das Lichtgitterbauteil an dem nächsten Lichtgitterbauteil eines Lichtgitterrahmens anliegt. In allen drei möglichen Fällen wird hierdurch der Pitch nicht verändert, so dass jeweils ein Totzonen- bzw. blindzonenfreies Aneinandersetzen zweier Lichtgitterbauteile dieser Art möglich ist.

In einer weiteren Ausgestaltung ist das Lichtgitterbauteil als abnehmbares Endstück einer Lichtgitterschiene ausgestaltet und weist zumindest ein Verbindungselement zur Verbindung mit einer solchen Lichtgitterschiene auf.

In dieser Ausgestaltung handelt es sich bei dem Lichtgitterbauteil also nicht um eine gesamte Lichtgitterschiene, sondern "nur" um eine sogenannte Endkappe einer Lichtgitterschiene. Solche Endkappen können als Abschlüsse eines Lichtgitters verwendet werden, welche meist als Hohlprofile ausgestaltet sind. Die Endkappe lässt sich beispielsweise mithilfe von Schrauben mit einem derartigen Hohlprofil verbinden. Der Vorteil solcher Endkappen besteht darin, dass sich "normale" Lichtgitterschienen verwenden lassen, um einen Lichtgitterrahmen herzustellen. Je nach Größe des gewünschten Lichtgitterrahmens lassen sich die Lichtgitterschienen auf Länge zuschneiden und danach die Endstücke beidseits auf die Enden der Lichtgitterschiene aufsetzen. Anstelle von Schraubenverbindungen lässt sich die Verbindung zwischen den Endkappen und der Lichtgitterschiene selbstverständlich auch mithilfe anderer Verbindungselemente, beispielsweise mit einem Click-System oder einer Nut-/Passfederverbindung, gewährleisten.

Bei dem oben genannten Lichtgitterbauteil mit den erwähnten schräg oder orthogonal zur Längsrichtung verlaufenden Stirnflächen kann es sich also sowohl um eine gesamte Lichtgitterschiene handeln als auch "nur" um ein Endstück einer solchen Lichtgitterschiene. Die zweite Möglichkeit ist aus oben genannten Gründen aus fertigungstechnischer Sicht allerdings bevorzugt.

Ausführungsbeispiele der Erfindung sind in der Zeichnung dargestellt und werden in der nachfolgenden Beschreibung näher erläutert. Es zeigen:
- Fig. 1: eine schematische Darstellung einer Biegepresse zur Veranschaulichung einer beispielhaften Anwendungsmöglichkeit des erfindungsgemäßen Lichtgitterbauteils;
- Fig. 2: eine schematische Darstellung eines nicht beanspruchten ersten Beispiels eines Lichtgitterbauteils, in Alleinstellung (Fig. 2a) sowie in zusammengebautem Zustand mit einem zweiten Lichtgitterbauteil dieser Art (Fig. 2b);
- Fig. 3: eine schematische Darstellung eines nicht beanspruchten zweiten Beispiels eines Lichtgitterbauteils, in Alleinstellung (Fig. 3a) sowie in zusammengebauten Zustand mit einem zweiten Lichtgitterbauteil dieser Art (Fig. 3b);
- Fig. 4: eine schematische Darstellung des erfindungsgemäßen Lichtgitterbauteils gemäß einer Ausführungsform, in Alleinstellung (Fig. 4a) sowie in verschiedenen Zusammenbauvarianten mit einem zweiten Lichtgitterbauteil dieser Art (Fig. 4b-4d);
- Fig. 5: eine perspektivische Darstellung einer Lichtgitterschiene mit dem erfindungsgemäßen Lichtgitterbauteil als Endstück, in einer Gesamtansicht (Fig. 5a) sowie in einer Detailansicht (Fig. 5b); und
- Fig. 6: eine schematische Darstellung eines aus dem Stand der Technik bekannten Lichtgitterbauteils.

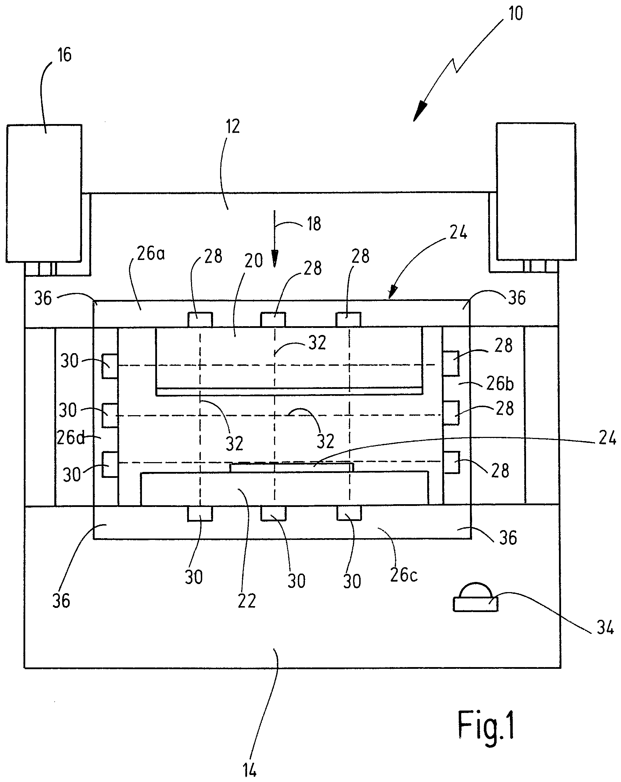

In Fig. 1 ist eine Biegepresse, welche in ihrer Gesamtheit mit der Bezugsziffer 10 bezeichnet ist, als beispielshafte automatisiert arbeitende Maschine gezeigt, bei der das erfindungsgemäße Lichtgitterbauteil als Teil einer Sicherheitsvorrichtung zur Absicherung der Maschine 10 zum Einsatz kommen kann. Es versteht sich jedoch, dass das erfindungsgemäße Lichtgitterbauteil als Teil einer Sicherheitsvorrichtung auch für diverse andere Anwendungsmöglichkeiten, beispielsweise zur Absicherung andersartiger Maschinen, zum Einsatz kommen kann. Die in Fig. 1 schematisch dargestellte Biegepresse 10 wird vorliegend lediglich zur schematischen Veranschaulichung und Erklärung der grundsätzlichen Funktionsweise eines Lichtgitters verwendet.

Die in Fig. 1 gezeigte Biegepresse 10 besitzt in an sich bekannter Weise ein erstes, in diesem Fall oberes Maschinenteil 12, und ein zweites, hier unteres Maschinenteil 14. Das obere Maschinenteil 12 kann über einen Antrieb, der hier schematisch bei der Bezugsziffer 16 angedeutet ist, in Richtung eines Pfeils 18 eine Arbeitsbewegung ausführen.

An dem oberen Maschinenteil 12 ist ein Biegestempel 20 angeordnet. Am unteren Maschinenteil 14 befindet sich eine Matrize 22. Der Biegestempel 20 und die Matrize 22 bilden zusammen die Presswerkzeuge, mit denen ein Werkstück 24 umgeformt werden kann. Bei dem Werkstück 24 handelt es sich hier beispielsweise um ein Blechteil.

Zur Absicherung der gefährlichen Maschinenbewegung der Biegepresse 10 ist vorliegend eine Lichtgittervorrichtung 24 vorgesehen. Diese Lichtgittervorrichtung 24 bildet einen Lichtgitterrahmen, welcher aus mehreren Lichtgitterschienen 26a-d zusammengesetzt ist, von denen sich jeweils zwei gegenüberliegen. Die einander gegenüberliegenden Lichtgitterschienen 26a, 26c bzw. 26b, 26d interagieren miteinander. Jede dieser Lichtgitterschienen 26a-d weist eine Vielzahl von optoelektronischen Sende- oder Empfangselementen 28, 30 auf. Bei den Sendeelementen 28 handelt es sich vorzugsweise um Laserdioden und/oder Infrarotdioden, mithilfe derer Laser- bzw. Infrarotstrahlen 32 (hier allgemein als Lichtstrahlen 32 bezeichnet) ausgesandt werden können. Bei den Empfangselementen 30 handelt es sich gewöhnlich um lichtempfindliche Sensoren, mithilfe derer die von den Sendeelementen 28 ausgesandten Lichtstrahlen 32 detektierbar sind. Im vorliegenden Fall weisen die Lichtgitterschienen 26a, b mehrere Sendeelemente 28 auf und die Lichtgitterschienen 26c, d mehrere Empfangselemente 30. Grundsätzlich ist es jedoch auch möglich, dass in einer Lichtgitterschiene 26a, b sowohl Sende- als auch Empfangselemente 28, 30 z.B. abwechselnd angeordnet sind. Für die Funktion des Lichtgitters 24 ist es von immenser Wichtigkeit, dass die Empfangselemente 30 ihren jeweils zugeordneten Sendeelementen 28 exakt gegenüberliegen.

Die Sende- und Empfangselemente 28, 30 des Lichtgitters 24 sind üblicherweise über entsprechende Signalleitungen mit einer Steuereinheit (hier nicht gezeigt) verbunden, welche die vom Lichtgitter 24 erzeugten Signale auswertet. Die Steuereinheit kann daher die Unterbrechung eines Lichtstrahls 32 detektieren und in Abhängigkeit dessen die Maschine 10 zum Stillstand bzw. in einen sicheren Zustand bringen. Die Arbeitsbewegung 18 der Maschine 10 wird insbesondere dann gestoppt, wenn die Steuereinheit feststellt, dass einer der Lichtstrahlen 32 zu einem Zeitpunkt unterbrochen wird, zu dem bei ordnungsgemäßem Betriebsablauf eine Unterbrechung nicht hätte stattfinden dürfen. In der Praxis kann dies beispielsweise dadurch geschehen, dass ein Bediener der Biegepresse 10 versehentlich in den Bewegungspfad des Biegestempels 20 eingreift. Bei einer solchen Unterbrechung eines Lichtstrahls 32 erzeugt die Steuereinheit ein sogenanntes OSSD-Signal (Optical Safety Switching Devise Signal).

Bei der Steuereinheit handelt es sich vorzugsweise um eine sogenannte SPS (speicherprogrammierbare Steuerung), die durch geeignete Maßnahmen, wie insbesondere eine redundante, diversitäre Auslegung, zum Steuern von sicherheitskritischen Prozessen zugelassen ist. Hierbei kann es sich beispielsweise um eine PSS3000 der Firma Pilz GmbH & Co., Deutschland handeln. Zur zusätzlichen Absicherung kann des Weiteren ein Not-Aus-Taster 34 vorgesehen sein, welcher ebenfalls mit der Steuereinheit verbunden ist und mithilfe dessen sich die Maschine 10 auch manuell abschalten lässt.

Es versteht sich, dass je nach Sicherheitsanforderung ein möglichst geringer Abstand zwischen den einzelnen Sende- bzw. Empfangselementen 28, 30 gewährleistet sein muss, um möglichst wenig Lücken zwischen den Lichtstrahlen 32 zu erzeugen. Dieser Abstand wird üblicherweise als Pitch bezeichnet. Wie eingangs bereits erläutert wurde, ist es insbesondere in den Ecken 36 eines Lichtgitterrahmens 24 häufig schwierig, diesen Pitch aufrechtzuerhalten. Bei einer Vielzahl von aus dem Stand der Technik bekannten Lichtgittern kommt es in diesen Ecken daher zu unerwünschten Tot- bzw. Blindzonen, also Zonen, die vom Lichtgitter nicht überwacht werden können. Es ist einleuchtend, dass solche Tot- bzw. Blindzonen aus Sicherheitsgründen unbedingt zu vermeiden sind.

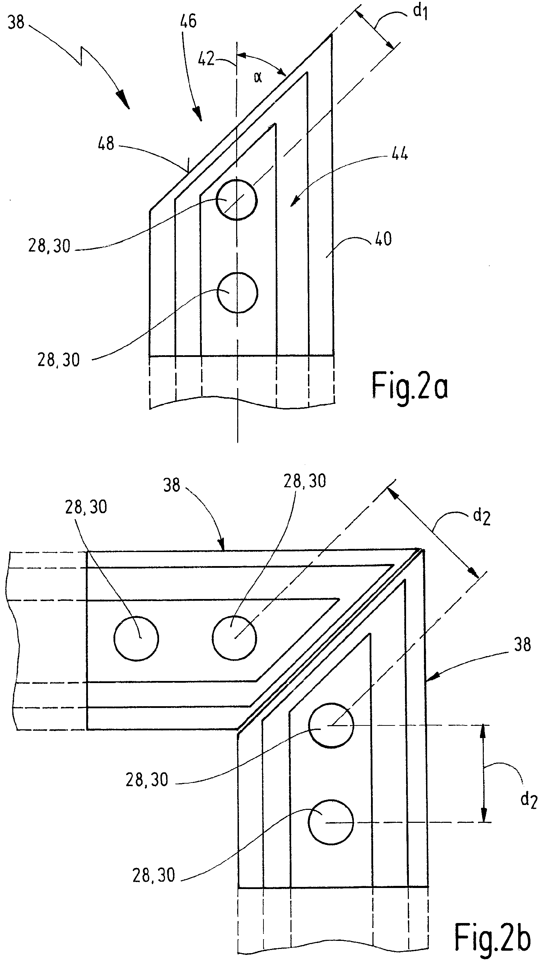

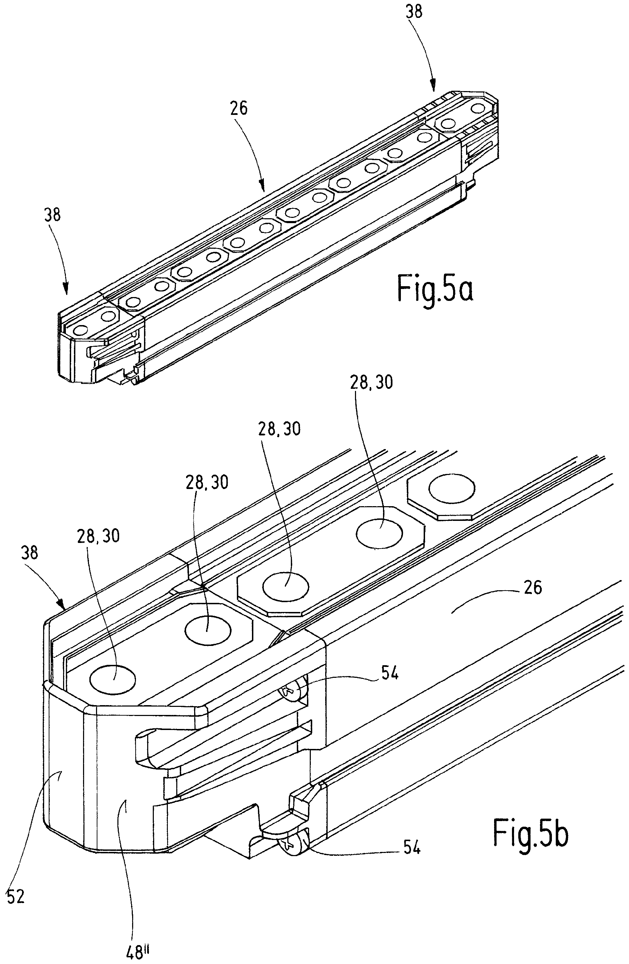

Dies wird gemäß der vorliegenden Erfindung durch Lichtgitter 24 gewährleistet, deren Enden ein oder mehrere abgeschrägte Stirnflächen aufweisen. Fig. 2a zeigt ein nicht beanspruchtes erstes Beispiel eines Lichtgitterbauteils, welches darin in seiner Gesamtheit mit der Bezugsziffer 38 gekennzeichnet ist. Dieses Lichtgitterbauteil 38 ist vorzugsweise als Endstück oder sogenannte Endkappe ausgestaltet, welche sich auf ein Ende einer Lichtgitterschiene 24 montieren lässt, wie dies in Fig. 5 gezeigt ist und nachfolgend noch näher erläutert wird. Grundsätzlich kann es sich bei dem Lichtgitterbauteil 38 jedoch auch um ein Ende einer Lichtgitterschiene 26 handeln, welches mit dem Rest der Lichtgitterschiene 26 untrennbar verbunden ist.

Das Lichtgitterbauteil 38 weist ein Gehäuse 40 auf, in welchem die Sende- bzw. Empfangselemente 28, 30 angeordnet sind. Das Gehäuse 40 dient im Wesentlichen als Trägerrahmen für die Sende- und Empfangselemente 28, 30 und agiert in dieser Funktion auch als mechanischer Stoßschutz für die meist empfindlichen Sende- bzw. Empfangselemente 28, 30. Mithilfe des Gehäuses 40 wird das Lichtgitterbauteil 38 üblicherweise an einem entsprechenden mechanischen Träger an der Maschine 10 befestigt. Das Gehäuse 40 erstreckt sich im Wesentlichen entlang einer Längsrichtung 42. Die Sende- oder Empfangselemente 28, 30 sind vorzugsweise zu einer Oberseite 44 des Gehäuses 40 hin ausgerichtet und entlang der Längsrichtung 42 voneinander beabstandet. Der Abstand d₂ zwischen zwei benachbarten Sende- bzw. Empfangselementen 28, 30 ist aus oben genannten Gründen vorzugsweise konstant.

An der Stirnseite 46, welche ein freies Ende des Lichtgitterbauteils 38 bildet, weist das Gehäuse 40 gemäß der ersten Ausführungsform eine erste planare Stirnfläche 48 auf. "Planar" ist vorliegend nicht im Sinne einer Oberflächenbeschaffenheit zu verstehen, sondern dahingehend, dass es sich hierbei um eine zweidimensionale Fläche handelt. Diese erste planare Stirnfläche 48 verläuft vorzugsweise orthogonal zu der Oberseite 44, allerdings schräg, also in einem Winkel a kleiner 90° zu der Längsrichtung 42 des Gehäuses 40. Durch diese schräg zur Längsrichtung 42 verlaufende Stirnfläche 48 des Gehäuses 40 lässt sich das Lichtgitterbauteil 38 einfacher zur Bildung einer Ecke eines Lichtgitterrahmens 24 mit einem zweiten Lichtgitterbauteil 38 dieser Art zusammensetzen. Dies ist schematisch in einer Draufsicht in Fig. 2b gezeigt.

Vorzugsweise hat der Winkel α zwischen der Längsrichtung 42 und der ersten planaren Stirnfläche 48 eine Größe von 45°.

Weiterhin ist es bevorzugt, dass der Abstand d₁ zwischen dem Sende- bzw. Empfangselement 28, 30, welches von der ersten planaren Stirnfläche 48 den geringsten Abstand aufweist, maximal halb so groß gewählt ist wie der Abstand d₂ zwischen zwei benachbarten Sende- bzw. Empfangselementen 28, 30 des Lichtgitterbauteils 38. Vorzugsweise ist der Abstand d₁ genau halb so groß wie der Abstand d₂. Hierdurch wird es möglich, dass, wie in Fig. 2b gezeigt, auch in den Ecken des Lichtgitterrahmens 24 keine Veränderung des Pitches erfolgt und somit keine Tot- bzw. Blindzonen entstehen. Setzt man nämlich die ersten planaren Stirnflächen 48 zweier derartiger Lichtgitterbauteile 38 bündig aneinander, so haben die beiden der jeweiligen Stirnfläche 48 räumlich nächstgelegenen Sende- bzw. Empfangselemente 28, 30 den gleichen Abstand d₂ voneinander, wie benachbarte Sende- bzw. Empfangselemente 28, 30 eines Lichtgitterbauteils 38 voneinander haben. Es versteht sich, dass der Abstand d₁ auch noch kleiner gewählt werden kann, also kleiner als d₂/2, um die Sicherheit in den Ecken eines Lichtgitterrahmens zusätzlich zu erhöhen..

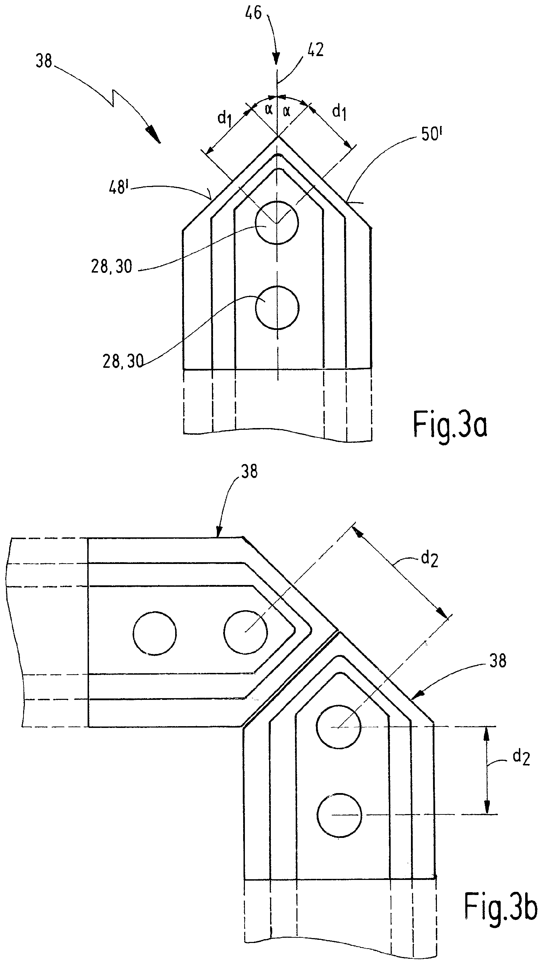

Die Flexibilität des Lichtgitterbauteils 38 lässt sich zusätzlich erhöhen, wenn statt nur einer dieser schräg zur Langsrichtung 42 verlaufenden planaren Stirnflächen 48 zwei derartiger Stirnflächen 48', 50' endseitig am Gehäuse 40 vorgesehen sind. Dies ist gemäß eines zweiten nicht beanspruchten Beispiels eines Lichtgitterbauteils 38 verwirklicht, welches in Fig. 3 dargestellt ist. Gemäß dieses Beispiels weist das Gehäuse 40 an dessen Stirnseite 46 vorzugsweise zwei planare Stirnflächen, eine erste planare Stirnfläche 48' sowie eine zweite planare Stirnfläche 50', auf. Beide Stirnflächen 48', 50' verlaufen wiederum vorzugsweise senkrecht zur Oberseite 44 des Gehäuses 40. Auch hier ist es bevorzugt, dass diese jeweils einen Winkel α kleiner 90° mit der Längsrichtung 42 einschließen. Besonders bevorzugt ist es, dass es sich hierbei um einen Winkel von 45° handelt. In diesem bevorzugten Fall verlaufen die beiden Stirnflächen 48', 50 also orthogonal zueinander. Bei gleicher Größer der beiden Stirnflächen 48', 50' ergibt sich ein symmetrisches Gehäuse 40, dessen Symmetrieachse entlang der Längsrichtung 42 verläuft.

Ähnlich wie bei dem in Fig. 2 gezeigten ersten Beispiel ist es auch bei dem zweiten Beispiel bevorzugt, dass der Abstand d₁ zwischen dem der Stirnseite 26 des Gehäuses 40 räumlich nächstliegenden Sende- bzw. Empfangselement 28, 30 und einer der beiden planaren Stirnflächen 48', 50' jeweils maximal halb so groß, vorzugsweise genau halb so groß gewählt ist wie der Abstand d₂ zwischen zwei benachbarten Sende- bzw. Empfangselementen 28, 30 im Lichtgitter 38. Gemäß des in Fig. 3 gezeigten Beispiels ist es auch bevorzugt, dass beide planare Stirnflächen 48', 50' jeweils den gleichen Abstand d₁ von dem diesen nächstliegenden Sende- bzw. Empfangselement 28, 30 aufweisen. Zur Bildung einer Ecke eines Lichtgitterrahmens 24 lässt sich das Lichtgitterbauteil dann nämlich sowohl mit der ersten planaren Stirnfläche 48' als auch mit der zweiten planaren Stirnfläche 50' an eine korrespondierende Stirnfläche 48' bzw. 50' eines zweiten Lichtgitterbauteils 38 dieser Art bündig aneinandersetzen, ohne dass es dabei zu Tot- oder Blindzonen des Lichtgitters im Bereich der Ecke kommt. Diese Situation ist schematisch in Fig. 3b dargestellt, wobei hier das untere Lichtgitterbauteil 38 mit der ersten planaren Stirnfläche 48' die zweite planare Stirnfläche 50' des oberen Lichtgitterbauteils 38 kontaktiert bzw. bündig an dieser anlegt. Selbstverständlich wäre dies auch umgekehrt möglich, so dass es gemäß dieser zweiten Ausführungsform zwei verschiedene Möglichkeiten des Aneinanderfügens zweier Lichtgitterbauteile 38 dieser Art gibt.

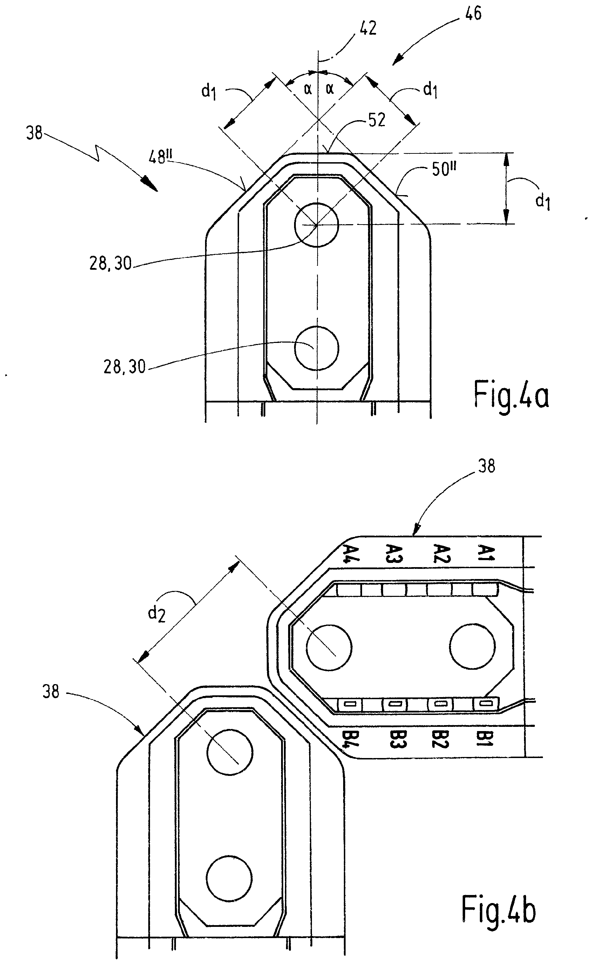

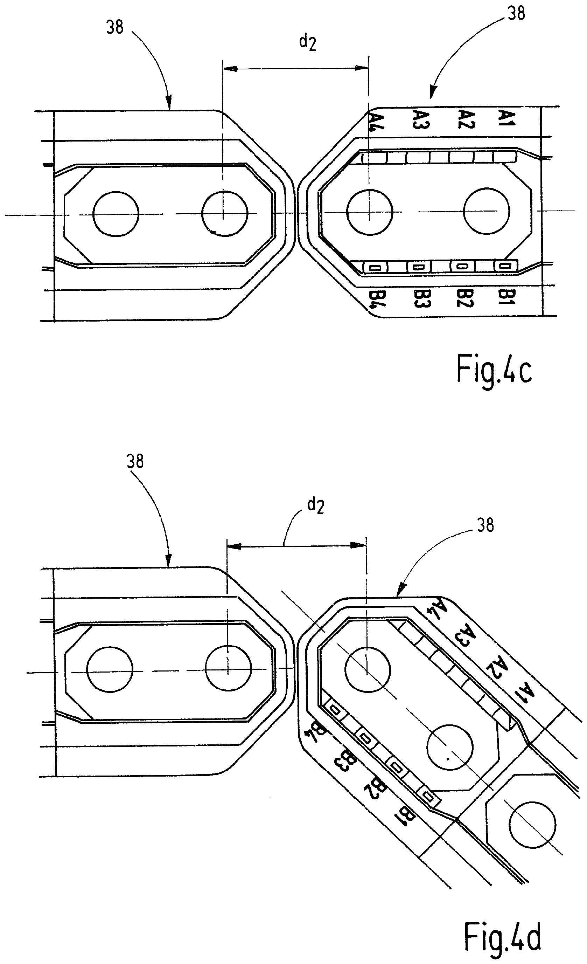

Fig. 4 zeigt eine Ausführungsform des erfindungsgemäßen Lichtgitterbauteils 38. Danach ist an der Stirnseite 46 des Gehäuses 40 zudem noch eine dritte planare Stirnfläche 52 vorgesehen. Diese dritte planare Stirnfläche 52 verläuft vorzugsweise ebenfalls orthogonal zur Oberseite 44 des Gehäuses 40. Im Gegensatz zu der ersten und zweiten planaren Stirnfläche 48", 50" verläuft die dritte planare Stirnfläche 52 allerdings orthogonal zur Längsrichtung 42. Die dritte planare Stirnfläche 42 ist räumlich zwischen der ersten planaren Stirnfläche 48" und der zweiten planaren Stirnfläche 50" angeordnet. Sie verbindet diese beiden planaren Stirnflächen 48", 50" also mit anderen Worten miteinander, wobei die dazwischen verlaufenden Kanten vorzugsweise abgerundet sind. Daraus resultiert in der in Fig. 4a gezeigten Draufsicht eine im Wesentlichen trapezförmige Stirnseite des Lichtgitterbauteils 38. Wenngleich es diesem Trapez strenggenommen an einer Grundseite fehlt, soll dies vorliegend dennoch als "im Wesentlichen trapezförmig" verstanden werden.

Auch bei dieser erfindungsgemäßen Ausführungsform ist es zur Vermeidung einer Pitch-Veränderung bevorzugt, dass der Abstand d₁ zwischen der dritten planaren Stirnfläche 52 und dem dieser räumlich nächstliegenden Sende- bzw. Empfangselement 28, 30 gleich groß ist wie der Abstand d₁ zwischen diesem "letzten" Sende- bzw. Empfangselement 28, 30 und den planaren Stirnflächen 48", 50".

Bei der in Fig. 4 gezeigten Ausführungsform wird die größtmögliche Flexibilität erreicht. Zwei Lichtgitterbauteile 38 dieser Bauart lassen sich dann nämlich in verschiedensten Ausrichtungen aneinandersetzen, ohne dass es dabei zu einer Veränderung des Pitches kommt. Drei der möglichen gegenseitigen Ausrichtungen sind in Fig. 4b-4d beispielhaft gezeigt. In Fig. 4b ist das untere Lichtgitterbauteil 38 mit seiner zweiten planaren Stirnfläche 50" an die erste planare Stirnfläche 48" des oberen Lichtgitterbauteils 38 bündig angeordnet. In Fig. 4c grenzen beide Lichtgitterbauteile 38 jeweils mit ihren dritten planaren Stirnfläche 52 aneinander. In Fig. 4d grenzt das linke Lichtgitterbauteil mit seiner dritten planaren Stirnfläche 52 an die erste planare Stirnfläche 48" des rechten Lichtgitterbauteils 38 an. Hierdurch lässt sich also auch eine Ausrichtung zweier Lichtgitterbauteile 38 unter einem Winkel von beispielsweise 45° erreichen.

Wie aus dem Vergleich der Fig. 4b-4d ersichtlich ist, bleibt unabhängig davon jeweils der Abstand d₂ zwischen den beiden "letzten" Sende- bzw. Empfangselementen 28, 30 erhalten, weichen diese auch zu den diesen benachbarten Sende- bzw. Empfangselementen 28, 30 des jeweils gleichen Lichtgitterbauteils 38 haben.

Fig. 5 zeigt eine Lichtgitterschiene 26, an deren Enden Lichtgitterbauteile 38 gemäß der vorliegenden Erfindung montiert sind. Die Lichtgitterbauteile 38 fungieren in diesem Fall als sogenannte Endkappen. Die in Fig. 5 gezeigten Lichtgitterbauteile 38 entsprechen der in Fig. 4 gezeigten Ausführungsform. Grundsätzlich ließen sich jedoch auch die Lichtgitterbauteile 38 gemäß den in Fig. 2 und 3 gezeigten Beispiele als Endkappen verwenden.

Fig. 5a zeigt eine perspektivische Übersichtsdarstellung. Fig. 5b zeigt eine Detailansicht. Wie aus Fig. 5b ersichtlich ist, wird das Lichtgitterbauteil 38 vorzugsweise mithilfe von Schrauben 54 an die Lichtgitterschiene 26 angeschraubt. Anstelle einer Schraubverbindung ließe sich diese Verbindung selbstverständlich auch durch andere Befestigungsmittel, beispielsweise durch eine Steckverbindung oder durch eine Nut-Passfeder-Verbindung lösen. Die Lichtgitterbauteile 38 lassen sich so auf die Enden von Lichtgitterschienen 26 unterschiedlichster Bauart und unterschiedlichster Länge montieren. Sie fungieren in diesem Fall sozusagen als Verbindungsstücke zu weiteren Lichtgitterschienen 26, um einen Lichtgitterrahmen 24, wie er schematisch und beispielhaft in Fig. 1 gezeigt ist, herzustellen.

## Patentansprüche

1. Lichtgitterbauteil (38) mit:
- einem Gehäuse (40), welches sich im Wesentlichen entlang einer Längsrichtung (42) erstreckt, und
- mehreren im Gehäuse (40) angeordneten, optoelektronischen Sende- oder Empfangselementen (28, 30), welche zu einer Oberseite (44) des Gehäuses (40) hin ausgerichtet sind und entlang der Längsrichtung (42) voneinander beabstandet sind,
wobei das Gehäuse (40) eine Stirnseite (46) aufweist, welche quer zur Oberseite (44) verläuft,
**dadurch gekennzeichnet, dass** die Stirnseite (46) in einer Draufsicht im Wesentlichen trapezförmig ist und eine erste, eine zweite sowie eine dritte planare Stirnfläche (48", 50", 52) aufweist, wobei die erste und die zweite planare Stirnfläche (48", 50") mit der Längsrichtung (42) jeweils einen Winkel (α) von 45° einschließen und untereinander einen Winkel von 90° einschließen, wobei die dritte planare Stirnfläche orthogonal zu der Längsrichtung (42) ausgerichtet ist und die erste und die zweite Stirnfläche (48", 50") miteinander verbindet, und wobei eines der im Gehäuse (40) angeordneten, optoelektronischen Sende- oder Empfangselemente (28, 30), welches der Stirnseite (46) räumlich am nächsten liegt, einen gleich großen ersten Abstand (d₁) von der ersten, der zweiten und der dritten planaren Stirnfläche (48"; 50", 52) hat.

2. Lichtgitterbauteil nach Anspruch 1, wobei der erste Abstand (d₁) maximal halb so groß ist wie ein zweiter Abstand (d₂) zwischen zwei im Gehäuse (40) direkt benachbarten, optoelektronischen Sende- oder Empfangselementen (28, 30).

3. Lichtgitterbauteil nach Anspruch 2, wobei der erste Abstand (d₁) genau halb so groß ist wie der zweite Abstand (d₂).

4. Lichtgitterbauteil nach einem der Ansprüche 1 bis 3, wobei das Lichtgitterbauteil (38) als abnehmbares Endstück einer Lichtgitterschiene (26) ausgestaltet ist, und zumindest ein Verbindungselement (54) zur Verbindung mit einer solchen Lichtgitterschiene (26) aufweist.

5. Lichtgitter (24) mit einem Lichtgitterbauteil (38) nach einem der Ansprüche 1 bis 4.

## Claims

1. A light curtain component (38), having:
- a housing (40) which extends essentially along a longitudinal direction (42), and
- a plurality of optoelectronic emission or reception elements (28, 30) arranged in the housing (40), which are oriented toward an upper side (44) of the housing (40) and are separated from one another along the longitudinal direction (42),
wherein the housing (40) comprises a front side (46) which extends transversely to the upper side (44),
**characterized in that** the front side (46) is essentially trapezoidal in a plan view and comprises a first, a second, and a third planar front surface (48", 50", 52), wherein the first and the second planar front surfaces (48", 50", 52) each form an angle (α) of 45° with the longitudinal direction (42) and an angle of 90° with each other, wherein the third planar front surface (52) is oriented orthogonally to the longitudinal direction (42) and connects the first and the second front surfaces (48"; 50") to one another, and wherein one of the optoelectronic emission or reception elements (28, 30), which is arranged in the housing (40) and lies spatially closest to the front side (46), has an equally large first distance (d₁) from the first, the second and the third planar front surfaces (48"; 50", 52).

2. The light curtain component as claimed in claim 1, wherein the first distance (d₁) is at most half as large as a second distance (d₂) between two optoelectronic emission or reception elements (28, 30) lying directly next to one another in the housing (40).

3. The light curtain component as claimed in claim 2, wherein the first distance (d₁) is precisely half as large as the second distance (d₂).

4. The light curtain component as claimed in one of claims 1 to 3, wherein the light curtain component (38) is configured as a removable endpiece of a light curtain rail (26) and comprises at least one connecting element (54) for connection to such a light curtain rail (26).

5. A light curtain (24) comprising a light curtain component (38) as claimed in one of claims 1 to 4.

## Revendications

1. Élément de barrière photoélectrique (38) comportant :
- un boîtier (40), lequel s'étend sensiblement le long d'une direction longitudinale (42), et
- plusieurs éléments d'émission ou de réception (28, 30) optoélectroniques disposés dans le boîtier (40), lesquels sont orientés vers un côté supérieur (44) du boîtier (40) et sont espacés les uns des autres le long de la direction longitudinale (42),
le boîtier (40) présentant un côté frontal (46), lequel s'étend transversalement par rapport au côté supérieur (44),
**caractérisé en ce que** le côté frontal (46) est sensiblement trapézoïdal en vue de dessus et présente une première, une deuxième ainsi qu'une troisième surface frontale (48", 50", 52) plane, la première et la deuxième surface frontale (48", 50") plane formant avec la direction longitudinale (42) respectivement un angle (a) de 45° et formant l'une avec l'autre un angle de 90°, la troisième surface frontale plane étant orientée de manière orthogonale à la direction longitudinale (42) et reliant la première et la deuxième surface frontale (48", 50") l'une à l'autre, et l'un des éléments d'émission ou de réception (28, 30) optoélectroniques disposés dans le boîtier (40), lequel élément est situé spatialement le plus près du côté frontal (46), présentant une première distance (d₁) de même grandeur par rapport à la première, à la deuxième et à la troisième surface frontale (48" ; 50", 52) plane.

2. Élément de barrière photoélectrique selon la revendication 1, la première distance (d₁) étant au maximum aussi grande qu'une deuxième distance (d₂) entre deux éléments d'émission ou de réception (28, 30) optoélectroniques directement adjacents dans le boîtier (40).

3. Élément de barrière photoélectrique selon la revendication 2, la première distance (d₁) étant exactement la moitié de la deuxième distance (d₂).

4. Élément de barrière photoélectrique selon l'une des revendications 1 à 3, l'élément de barrière photoélectrique (38) étant configuré sous forme de pièce d'extrémité amovible d'un rail de barrière photoélectrique (26), et présentant au moins un élément de liaison (54) servant à la liaison à un tel rail de barrière photoélectrique (26).

5. Barrière photoélectrique (24) comportant un élément de barrière photoélectrique (38) selon l'une des revendications 1 à 4.
